# EUROPÄISCHE PATENTANMELDUNG

(11) **EP 1 426 741 A1**
(43) Veröffentlichungstag der Anmeldung: **09.06.2004**
(21) Anmeldenummer: 03020870.6
(22) Anmeldetag: 15.09.2003
(51) Int. Cl.: G01F 1/84, G01F 15/02

(54) **Coriolis-Massendurchflussmessgerät mit Dehnungsmessstreifen zur Druckmessung**

(30) Priorität: 02.12.2002 DE 10256376
(71) Anmelder: Krohne AG, 4019 Basel (CH)
(72) Erfinder: Hussain, Youssif, Dr., Northampton / NN3 3DA (GB)
(74) Vertreter: Gesthuysen, von Rohr & Eggert

(57) **Zusammenfassung**

Dargestellt und beschrieben sind ein Massendurchflußmeßgerät und ein Verfahren zur Druckmessung bei einem Massendurchflußmeßgerät. Das Massendurchflußmeßgerät arbeitet nach dem Coriolis-Prinzip und weist eine Meßleitung (1) auf, wobei ein Spannungssensor (3) vorgesehen ist und der Spannungssensor (3) derart an der Meßleitung (1) angebracht ist, daß mit dem Spannungssensor (3) die mechanische Spannung der Meßleitung (1) erfaßbar ist. Erfindungsgemäß ist eine Drucksignalausgabeeinrichtung (4) vorgesehen, der Spannungssensor (3) ist zur Übertragung eines Spannungssignals mit der Drucksignalausabeeinrichtung (4) verbunden und von der Drucksignalausgabeeinrichtung (4) ist ein auf der Grundlage des Spannungssignals ermitteltes Drucksignal ausgebbar. Damit wird ein Coriolis-Massendurchflußmeßgerät bereitgestellt, mit dem auf einfache und verläßliche Weise ein zusätzlicher Parameter, nämlich der Druck des durch die Meßleitung (1) fließenden Mediums, erfaßt und ausgegeben werden kann,

## Beschreibung

Die Erfindung betrifft ein Massendurchflußmeßgerät, das nach dem Coriolis-Prinzip arbeitet und eine Meßleitung aufweist, wobei ein Spannungssensor vorgesehen ist und der Spannungssensor derart an der Meßleitung angebracht ist, das mit dem Spannungssensor die mechanische Spannung der Meßleitung erfaßbar ist. Die Erfindung betrifft ferner ein Verfahren zur Druckmessung bei einem Massendurchflußmeßgerät, das nach dem Coriolis-Prinzip arbeitet und eine Meßleitung aufweist.

Ein Coriolis-Massendurchflußmeßgerät der eingangs genannten Art ist z. B. aus der DE 42 24 379 C1 bekannt. Bei diesem Coriolis-Massendurchflußmeßgerät ist vorgesehen, daß ein Änderungen der Schwingungslänge der Meßleitung erfassender Längenänderungssensor zur schwingungslängen- und spannungsabhängigen Korrektur des Meßwerts für den Massendurchfluß bereitgestellt wird. Ist darüber hinaus ein die Temperatur der Meßleitung erfassender Temperatursensor zur Korrektur des Meßwerts vorgesehen, so können einerseits Temperaturänderungen der Meßleitung und andererseits Längenänderungen der Meßleitung, und zwar der Schwingungslänge der Meßleitung, die den Meßwert beeinflussen, zur Korrektur des Meßwerts herangezogen werden. Damit können auf Temperaturänderungen der Meßleitung beruhende Meßfehler, aber solcher Meßfehler verringert oder eliminiert werden, die aus von außen einwirkenden Kräften resultieren.

Dadurch daß bei diesem aus dem Stand der Technik bekannten Coriolis-Massendurchflußmeßgerät ein Änderungen der Schwingungslänge der Meßleitung erfassender Längenänderungssensor vorgesehen ist, kann eine die Schwingungsfrequenz der Meßleitung beeinflussende Änderung der Schwingungslänge und des axialen Spannungszustands der Meßleitung berücksichtigt werden, wodurch Meßfehler verringert oder eliminiert werden können. Bei zusätzlichem Vorsehen eines Temperatursensors können einerseits solche Meßfehler verringert oder eliminiert werden, die auf Temperaturänderungen der Meßleitung beruhen, und andererseits solche, die auf Kräften beruhen, die von außen auf die Meßleitung einwirken. Dabei sind die vom Längenänderungssensor herrührenden Längenänderungssignale ein unmittelbares Maß für Änderungen der Schwingungslänge der Meßleitung, unabhängig von deren Herkunft, und ein indirektes Maß für Veränderungen des axialen Spannungszustands der Meßleitung, ebenfalls unabhängig von deren Herkunft. Der Längenänderungssensor zur Erfassung der Änderungen der Schwingungslänge der Meßleitung ermöglicht es also, Änderungen der Schwingungslänge der Meßleitung und Änderungen des axialen Spannungszustands der Meßleitung zu erfassen und darauf beruhende Meßfehler bei der Bestimmung des Meßwerts zu verringern oder zu eliminieren.

Das zuvor beschriebene, aus dem Stand der Technik bekannte Coriolis-Massendurchflußmeßgerät mit einem Spannungssensor zur Erfassung der mechanischen Spannung der Meßleitung stellt also eine Möglichkeit bereit, korrigierte Meßwerte für den Massendurchfluß auszugeben. Eine Ausgabe von zusätzlichen Werten, die nicht den Massendurchfluß durch die Meßleitung des Coriolis-Massendurchflußmeßgeräts betreffen, ist dabei jedoch nicht vorgesehen. Ist also die Erfassung und Ausgabe weiterer Parameter, wie z. B. des Drucks des durch die Meßleitung des Coriolis-Massendurchflußmeßgeräts fließenden Mediums, von Interesse, so muß ein geeigneter zusätzlicher Sensor vorgesehen werden.

Ausgehend davon ist es die Aufgabe der Erfindung, ein Coriolis-Massendurchflußmeßgerät bzw. ein solches Verfahren anzugeben, mit denen die zusätzliche Erfassung und Ausgabe eines weiteren Parameters, nämlich des Drucks des durch die Meßleitung des Coriolis-Massendurchflußmeßgeräts fließenden Mediums erfaßbar ist.

Ausgehend von dem eingangs beschriebenen Massendurchflußmeßgerät ist die zuvor hergeleitete und aufgezeigte Aufgabe dadurch gelöst, daß eine Drucksignalausgabeeinrichtung vorgesehen ist, der Spannungssensor zur Übertragung eines Spannungssignals mit der Drucksignalausgabeeinrichtung verbunden ist und von der Drucksignalausgabeeinrichtung ein auf der Grundlage des Spannungssignals ermitteltes Drucksignal ausgebbar ist.

Erfindungsgemäß wird damit ausgenutzt, daß eine Druckänderung des durch die Meßleitung fließenden Mediums grundsätzlich zu einer Umfangsänderung der Meßleitung führt. Das Maß der Änderung des Umfangs der Meßleitung, also das Maß der Änderung der Umfangsspannung, ist dabei abhängig von der Umfangselastizität der Meßleitung. Eine sehr dickwandige Meßleitung mit insgesamt geringem Durchmesser wird bei einer Druckänderung des durch die Meßleitung fließenden Mediums eine nur kaum erfaßbare Umfangsänderung zeigen, während sehr dünnwandige Meßleitungen mit einem insgesamt sehr großen Durchmesser eine deutliche Änderung der Umfangsspannung und damit des Umfangs selbst zeigen werden.

Wenn vorliegend davon die Rede ist, daß der Spannungssensor zur Übertragung eines Spannungssignals mit der Drucksignalausgabeeinrichtung verbunden ist und von der Drucksignalausgabeeinrichtung ein auf der Grundlage des Spannungssignals ermitteltes Drucksignal ausgebbar ist, so ist klar, daß aus dem von dem Spannungssensor erfaßten Spannungssignal erst noch ein Drucksignal ermittelt werden muß. Diese Ermittlung des Drucksignals aus dem Spannungssignal kann auf verschiedene Weisen erfolgen: Erstens nämlich z. B. auf der Grundlage eines theoretisch ermittelten Zusammenhangs zwischen dem Druck des durch die Meßleitung fließenden Mediums einerseits und der Umfangsänderung der Meßleitung bei einer konkret vorgegebenen Geometrie der Meßleitung andererseits, und zweitens durch empirisch ermittelte Daten. Zur Ermittlung solcher Daten wird die Meßleitung z. B. jeweils von einem Medium mit einem bekannten Druck durchflossen, und bei diesem bekannten Druck wird die Spannung gemessen. Damit ergibt sich eine Datenreihe mit konkreten Wertepaaren von Druck einerseits und Spannung andererseits. Mit diesen Wertepaaren kann eine Tabelle erstellt werden, aus der im Betrieb des Coriolis-Massendurchflußmeßgeräts abhängig von der erfaßten Spannung ein entsprechender Druck abgelesen werden kann. Zwischenwerte können durch Interpolation ermittelt werden. Damit kann auch eine empirische Eichkurve für die Abhängigkeit des Drucks des durch die Meßleitung fließenden Mediums von der erfaßten Spannung erstellt werden.

Die eigentliche Umsetzung des Spannungssignals in ein Drucksignal muß nicht zwingend in der Drucksignalausgabeeinrichtung erfolgen. Vielmehr kann diese Umsetzung auch in einer anderen Einrichtung des Coriolis-Massendurchflußmeßgeräts erfolgen, so daß die Drucksignalausgabeeinrichtung dann mittelbar mit dem Spannungssensor verbunden ist, nämlich wenigstens mittels dieser zusätzlichen Einrichtung zur Ermittlung des Drucksignals in Abhängigkeit vom erfaßten Spannungssignal.

Zuvor ist schon gesagt worden, daß sich das der Erfindung zugrundeliegende Prinzip insbesondere dann gut ausnutzen läßt, wenn eine dünnwandige Meßleitung mit einem insgesamt großen Durchmesser vorgesehen ist. Dementsprechend ist gemäß einer bevorzugten Weiterbildung der Erfindung eine dünnwandige Meßleitung vorgesehen, deren Durchmesser in der Größenordnung ihrer Länge liegt. Dabei ist insbesondere vorgesehen, daß das Verhältnis der Länge der Meßleitung zu ihrem Durchmesser kleiner oder gleich 6 und vorzugsweise kleiner oder gleich 4 ist. In diesem Zusammenhang sei jedoch angemerkt, daß sich das erfindungsgemäße Prinzip grundsätzlich auch bei solchen Coriolis-Massendurchflußmeßgeräten ausnutzen läßt, deren Länge im Verhältnis zu deren Durchmesser größer ist. Schließlich sei darauf hingewiesen, daß sich besonders gute Ergebnisse mit solchen Coriolis-Massendurchflußmeßgeräten erzielen lassen, die eine Meßleitung mit einer Wandstärke zwischen 0,5 mm und 0,25 mm aufweisen. Insofern kommen für die Anwendung des erfindungsgemäßen Prinzips insbesondere auch solche Coriolis-Massendurchflußmeßgeräte in Betracht, wie in der WO 01/92833 beschrieben.

Als Spannungssensor können grundsätzlich alle aus dem Stand der Technik bekannten Spannungssensoren verwendet werden. Insbesondere ist es dabei vorteilhaft, wenn der Spannungssensor aufgrund seiner Masse eine nur geringe und vorzugsweise vernachlässigbare Beeinflussung der Schwingungscharakteristik der Meßleitung aufweist. Gemäß einer bevorzugten Weiterbildung der Erfindung ist vorgesehen, daß als Spannungssensor ein Längeänderungssensor verwendet wird, insbesondere nämlich ein Dehnungsmeßstreifen, mit dem Umfangsänderungen der Meßleitung erfaßbar sind. Damit Umfangsänderungen der Meßleitung erfaßbar sind, ist es erforderlich, daß der Spannungssensor nicht ausschließlich in Längsrichtung der Meßleitung orientiert ist. Seine Orientierung muß jedenfalls auch einen Anteil in Umfangsrichtung der Meßleitung aufweisen, was bedeutet, daß die Orientierung des Spannungssensors im Winkel zur Längsachse der Meßleitung verläuft.

Für die erfindungsgemäß vorgesehene Funktion des Spannungssensors ist es ausreichend, daß dieser wenigstens teilweise in Umfangsrichtung der Meßleitung orientiert ist, so daß Umfangsänderungen der Meßleitung erfaßbar sind. Gemäß einer bevorzugten Weiterbildung der Erfindung ist jedoch vorgesehen, daß der Spannungssensor genau in Umfangsrichtung der Meßleitung orientiert ist, so daß der Spannungssensor ausschließlich von Änderungen der Umfangsspannung beeinflußbar ist, und nicht von solchen Spannungsänderungen, die von Änderungen der Umfangsspannung verschieden sind. Ist gemäß einer bevorzugten Weiterbildung der Erfindung zusätzlich zum Spannungssensor für die Umfangsspannung ein Hilfsspannungssensor vorgesehen, der von der Umfangsspannung nicht beeinflußbar ist, so können unterschiedliche Arten von Spannungsänderungen separat voneinander erfaßt werden. Insbesondere kann gemäß einer bevorzugten Weiterbildung der Erfindung dabei vorgesehen sein, daß der Hilfsspannungssensor zur Übertragung eines Hilfsspannungssignals mit der Drucksignalausgabeeinrichtung verbunden ist und von der Drucksignalausgabeeinrichtung ein auf der Grundlage des Hilfsspannungssignals korrigiertes Drucksignal ausgebbar ist. Damit ist also eine Korrektur hinsichtlich anderer Spannungsänderungen möglich, die nicht auf Druckänderungen des Mediums zurückzuführen sind. Insbesondere kommen als solche anderen Spannungsänderungen durch Temperaturänderungen hervorgerufene Spannungsänderungen in Betracht.

Gemäß einer bevorzugten Weiterbildung der Erfindung kann bei dem erfindungsgemäßen Coriolis-Massendurchflußmeßgerät schließlich eine mit der Drucksignalausgabeeinrichtung verbundene Massendurchflußausgabeeinrichtung vorgesehen sein, wobei von der Massendurchflußausgabeeinrichtung ein auf der Grundlage des Drucksignals korrigiertes Massendurchflußsignal ausgebbar ist. Damit wird eine Korrektur des vom Coriolis-Massendurchflußmeßgerät ausgegebenen Massendurchflußsignals hinsichtlich des Drucks des durch die Meßleitung fließenden Mediums ermöglicht, ohne mit einem separaten Drucksensor, typischereeise kurz vor oder nach der Meßleitung des Coriolis-Massendurchflußmeßgeräts, separat den Druck zu messen.

Ausgehend von dem eingangs genannten Verfahren zur Druckmessung bei einem Massendurchflußmeßgerät, das nach dem Coriolis-Prinzip arbeitet, ist die weiter oben hergeleitete und aufgezeigte Aufgabe dadurch gelöst, daß die mechanische Spannung der Meßleitung erfaßt wird und auf der Grundlage der erfaßten Spannung der Meßleitung der Druck in der Meßleitung ermittelt wird.

Bevorzugte Weiterbildungen des erfindungsgemäßen Verfahrens ergeben sich in Analogie zu den zuvor beschriebenen bevorzugten Weiterbildungen des erfindungsgemäßen Massendurchflußmeßgeräts. Dabei ist das erfindungsgemäße Verfahren insbesondere zur Verwendung für solche Massendurchflußmeßgeräte geeignet, bei denen eine dünnwandige Meßleitung vorgesehen ist, deren Durchmesser in der Größenordnung ihrer Länge liegt. Wie weiter oben schon ausgeführt, sind solche zur Verwendung mit dem erfindungsgemäßen Verfahren besonders geeignete Coriolis-Massendurchflußmeßgeräte z. B. in der WO 01/92833 beschrieben.

Im einzelnen gibt es eine Vielzahl von Möglichkeiten, das erfindungsgemäße Massendurchflußmeßgerät sowie das erfindungsgemäße Verfahren zur Druckmessung bei einem Massendurchflußmeßgerät auszugestalten und weiterzubilden. Dazu wird einerseits auf die den unabhängigen Patentansprüchen nachgeordneten Patentansprüche sowie auf die nachfolgende detaillierte Beschreibung bevorzugter Ausführungsbeispiele der Erfindung unter Bezugnahme auf die Zeichnung verwiesen. In der Zeichnung zeigt
- Fig. 1: ein Coriolis-Massendurchflußmeßgerät gemäß einem ersten bevorzugten Ausführungsbeispiel der Erfindung schematisch im Schnitt,
- Fig. 2: ein Coriolis-Massendurchflußmeßgerät gemäß einem zweiten bevorzugten Ausführungsbeispiel der Erfindung schematisch in einer Seitenansicht und
- Fig. 3: eine für das Coriolis-Massendurchflußmeßgerät gemäß dem zweiten bevorzugten Ausführungsbeispiel der Erfindung vorgesehene Schaltung.

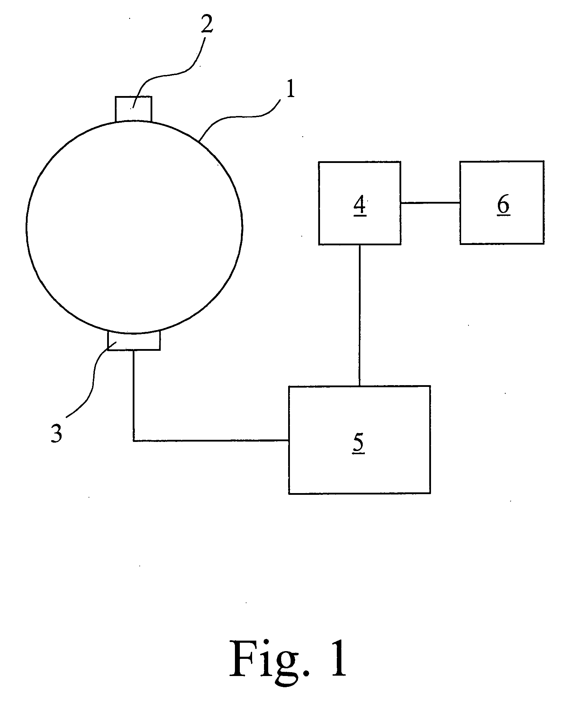

Aus Fig. 1 ist ein Coriolis-Massendurchflußmeßgerät gemäß einem ersten bevorzugten Ausführungsbeispiel der Erfindung ersichtlich, und zwar in einer schematischen Schnittansicht. Das Coriolis-Massendurchflußmeßgerät weist eine Meßleitung 1 aufweist, an der ein Schwingungserreger 2 angebracht ist. Das Coriolis-Massendurchflußmeßgerät gemäß dem ersten bevorzugten Ausführungsbeispiel der Erfindung ist als sogenanntes "Thin Shell"-Gerät ausgebildet, was bedeutet, daß erstens die Meßleitung 1 relativ dünnwandig ist, vorliegend nämlich eine Wanddicke von lediglich 0,25 mm aufweist, und zweitens das Verhältnis von Länge der Meßleitung 1 zu deren Durchmesser gering ist, vorliegend nämlich unter 4 liegt. Konkret weist die Meßleitung 1 des Coriolis-Massendurchflußmeßgeräts gemäß dem ersten bevorzugten Ausführungsbeispiel der Erfindung eine Länge von ca. 90 mm und einen Durchmesser von ca. 25 mm auf.

Wie aus Fig. 1 ersichtlich, ist an der Meßleitung 1 ein Spannungssensor 3 angeordnet, nämlich in Form eines Dehnungsmeßstreifens. Dehnungsmeßstreifen als Meßfühler für mechanische Größen, wie kleine Dehnungen, Stauchungen, Biegungen und Torsionen sowie die zugehörigen elastischen Spannungen, sind aus dem Stand der Technik gut bekannt. Das wirksame Meßelement eines solchen Dehnungsstreifens besteht z. B. aus einem dünnen Widerstandsdraht, der schleifen- oder zickzackförmig auf einen dehnbaren Streifen aus z. B. Kunststoff als Träger aufgebracht ist. Wird der Dehnungsmeßstreifen auf einen verformbaren Körper, wie die Meßleitung 1 des Coriolis-Massendurchflußmeßgeräts gemäß dem ersten bevorzugten Ausführungsbeispiel der Erfindung, aufgebracht, so erfährt er ebenfalls die bei Belastung der Meßstelle auftretenden Dehnungen oder Stauchungen, was zu einer Längung und Querkontraktion bzw. Verkürzung und Querstauchung des Widerstandsdrahtes und damit zu einer Änderung seines elektrischen Widerstandes führt. Diese Widerstandsänderung ist zur Dehnung und damit nach dem Hookschen-Gesetz zur elastischen Spannung proportional.

Um die Umfangsspannung der Meßleitung 1, also deren Dehnung bzw. Kontraktion in Umfangsrichtung, erfassen zu können, ist es erforderlich, daß der Meßstreifen im Winkel zur Längsachse der Meßleitung 1 angeordnet ist. Gemäß dem aus Fig. 1 ersichtlichen ersten bevorzugten Ausführungsbeispiel der Erfindung ist der Spannungssensor 3 in Form des Dehnungsmeßstreifens genau in Umfangsrichtung an der Meßleitung 1 angebracht. Damit werden mit diesem Spannungssensor 3 ausschließlich von einer Umfangsänderung der Meßleitung 1 herrührende Spannungsänderungen und keine anderen Spannungsänderungen, insbesondere in Längsrichtung der Meßleitung 1, erfaßt.

Wie in Fig. 1 dargestellt, ist bei dem Coriolis-Massendurchflußmeßgerät gemäß dem ersten bevorzugten Ausführungsbeispiel der Erfindung eine Drucksignalausgabeeinrichtung 4 vorgesehen, die mit dem Spannungssensor 3 über eine Recheneinheit 5 verbunden ist. Ein von dem Spannungssensor 3 ermitteltes Spannungssignal wird nun der Recheneinheit 5, die in Form eines Mikroprozessors vorliegen kann, zugeführt, wo auf der Grundlage von empirisch ermittelten Werten, nämlich einer empirischen Funktion für die Abhängigkeit der von dem Spannungssensor 3 erfaßten Spannung von dem Druck des durch die Meßleitung 1 fließenden Mediums, aus dem Spannungssignal ein Drucksignal berechnet wird. Dieses Drucksignal wird dann an die Drucksignalausgabeeinrichtung 4 zur Ausgabe weitergegeben. Die Drucksignalausgabeeinrichtung 4 kann in Form einer optischen Anzeige vorliegen, es kann jedoch auch vorgesehen sein, daß die Drucksignalausgabeeinrichtung 4 eine Busschnittstelle ist, so daß das Drucksignal anderweitig weiterverarbeitet werden kann. Schließlich kann vorgesehen sein, daß die Drucksignalausgabeeinrichtung 4, wie vorliegend gemäß dem ersten bevorzugten Ausführungsbeispiel der Erfindung dargestellt, mit der Massendurchflußausgabeeinrichtung 6 des Coriolis-Massendurchflußmeßgeräts verbunden ist, so daß eine Korrektur des Massendurchflußsignals durch das Drucksignal erfolgen und von der Massendurchflußausgabeeinrichtung 6 ein auf der Grundlage des Drucksignals korrigiertes Massendurchflußsignal ausgegeben werden kann.

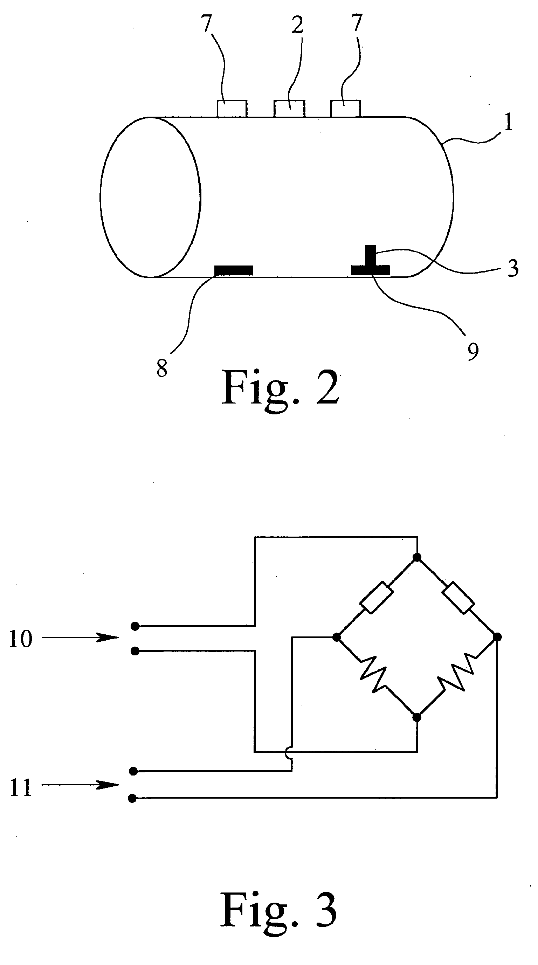

Aus Fig. 2 ist nun ein Coriolis-Massendurchflußmeßgerät gemäß einem zweiten bevorzugten Ausführungsbeispiel der Erfindung schematisch in einer Seitenansicht ersichtlich. Bei dem Coriolis-Massendurchflußmeß-gerät dem zweiten bevorzugten Ausführungsbeispiel der Erfindung sind jeweils neben und im Abstand von dem Schwingungserreger 2 angeordnete Schwingungsaufnehmer 7 vorgesehen. Diese Schwingungsaufnehmer 7 erfassen das durch den Coriolis-Effekt beeinflußte Schwingungssignal der Meßleitung 1, wobei, wie für Coriolis-Massendurchflußmeßgeräte allgemein bekannt, aus der Phasendifferenz der von dem einen bzw. dem anderen Schwingungsaufnehmer 7 her kommenden Schwingungssignalen eine Berechnung des Massendurchflusses durch die Meßleitung 1 erfolgt. Die Schwingungsaufnehmer 7 sind somit, wenn auch in Fig. 2 nicht weiter dargestellt, mit der Massendurchflußausgabeeinrichtung 6 zur Ausgabe eines Wertes für den Massendurchfluß verbunden.

Wie weiterhin aus Fig. 2 ersichtlich, ist bei dem Coriolis-Massendurchflußmeßgerät gemäß dem zweiten bevorzugten Ausführungsbeispiel der Erfindung ein Temperatursensor 8 vorgesehen. Dieser ist auf der Meßleitung 1 angebracht. Da, wie eingangs im Zusammenhang mit dem gattungsgemäßen Coriolis-Massendurchflußmeßgerät erläutert, Spannungsänderungen der Meßleitung 1 insbesondere auch aufgrund von Temperaturänderungen auftreten, kann durch die Ermittlung der Temperatur der Meßleitung 1 mittels des Temperatursensors 8 die auf Temperaturänderungen zurückgehende Spannungsänderung der Meßleitung 1 ermittelt werden. Damit kann ein erfaßtes Spannungssignal korrigiert werden, so daß im Ergebnis ein solches Spannungssignal erhalten werden kann, das lediglich von Druckänderungen des durch die Meßleitung 1 strömenden Mediums herrührenden Spannungsänderung beruht.

Zusätzlich ist, wie aus Fig. 2 ersichtlich, bei dem Coriolis-Massendurchflußmeßgerät gemäß dem zweiten bevorzugten Ausführungsbeispiel der Erfindung eine Anordnung eines Spannungssensors 3 zusammen mit einem Hilfsspannungssensor 9 vorgesehen. Dabei ist der Spannungssensor 3 vollständig in Umfangsrichtung der Meßleitung 1 orientiert, während die Orientierung des Hilfsspannungssensors 9 senkrecht dazu verläuft, nämlich in Längsrichtung der Meßleitung 1. Durch diese Orientierung des Hilfsspannungssensors 9 werden von diesem keine Umfangsspannungsänderungen erfaßt, so daß folgendes Verfahren ermöglicht wird: Der Spannungssensor 3 sowie der Hilfsspannungssensor 9 werden, jeweils in Form eines Dehnungsmeßstreifens, innerhalb einer Wheatstone-Brücke angeordnet, wie aus Fig. 3 ersichtlich. Dadurch, daß sowohl der Spannungssensor 3 als auch der Hilfsspannungssensor 9 beide durch Temperaturänderungen beeinflußt werden, wird bei Abgleich der Wheatstone-Brücke der Temperatureffekt eliminiert: Das am Ausgang 10 der Wheatstone-Brücke ausgegebene elektrische Spannungssignal ist von auf Temperaturänderungen zurückzuführenden Spannungsänderungen in der Meßleitung 1 unabhängig. Der Eingang 11 der Wheatstone-Brücke dient bekanntermaßen zum Anschluß einer Versorgungsspannung.

Bei dem Coriolis-Massendurchflußmeßgerät gemäß dem zweiten bevorzugten Ausführungsbeispiel der Erfindung sind, wie aus Fig. 2 ersichtlich, sowohl ein Temperatursensor 8 als auch eine Kombination von Spannungssensor 3 und Hilfsspannungssensor 9 zur Verwendung im Rahmen einer Wheatstone-Brücke vorgesehen. Selbstverständlich kann zur Eliminierung des Temperatureffekts nur ein Spannungssensor 3 ohne Hilfsspannungssensor 9 zusammen mit dem Temperatursensor 8 vorgesehen sein. Der Temperatursensor 8 kann jedoch dann fehlen, wenn die Kombination aus Spannungssensor 3 und Hilfsspannungssensor 9, wie zuvor beschrieben, vorhanden ist.

## Patentansprüche

1. Massendurchflußmeßgerät, das nach dem Coriolis-Prinzip arbeitet und eine Meßleitung (1) aufweist, wobei ein Spannungssensor (3) vorgesehen ist und der Spannungssensor (3) derart an der Meßleitung (1) angebracht ist, daß mit dem Spannungssensor (3) die mechanische Spannung der Meßleitung (1) erfaßbar ist, **dadurch gekennzeichnet, daß** eine Drucksignalausgabeeinrichtung (4) vorgesehen ist, der Spannungssensor (3) zur Übertragung eines Spannungssignals mit der Drucksignalausgabeeinrichtung (4) verbunden ist und von der Drucksignalausgabeeinrichtung (4) ein auf der Grundlage des Spannungssignals ermitteltes Drucksignal ausgebbar ist.

2. Massendurchflußmeßgerät nach Anspruch 1, **dadurch gekennzeichnet, daß** eine mit der Drucksignalausgabeeinrichtung (4) verbundene Massendurchflußausgabeeinrichtung (6) vorgesehen ist und von der Massendurchflußaufgabeeinrichtung (6) ein auf der Grundlage des Drucksignals korrigiertes Massendurchflußsignal ausgebbar ist.

3. Massendurchflußmeßgerät nach Anspruch 1 oder 2, **dadurch gekennzeichnet, daß** als Meßleitung (1) eine dünnwandige Meßleitung (1) vorgesehen ist, deren Durchmesser in der Größenordnung ihrer Länge liegt.

4. Massendurchflußmeßgerät nach einem der Ansprüche 1 bis 3, **dadurch gekennzeichnet, daß** als Spannungssensor (3) ein Längenänderungssensor, insbesondere ein Dehnungsmeßstreifen, vorgesehen ist, mit dem Umfangsänderungen der Meßleitung (1) erfaßbar sind.

5. Massendurchflußmeßgerät nach einem der Ansprüche 1 bis 4, **dadurch gekennzeichnet, daß** der Spannungssensor (3) in Umfangsrichtung der Meßleitung (1) orientiert ist, so daß der Spannungssensor (3) nur von Änderungen der Umfangsspannung der Meßleitung (1) beeinflußbar ist.

6. Massendurchflußmeßgerät nach Anspruch 5, **dadurch gekennzeichnet, daß** zusätzlich zum Spannungssensor (3) für die Umfangsspannung ein Hilfsspannungssensor (9) vorgesehen ist, der von der Umfangsspannung nicht beeinflußbar ist.

7. Massendurchflußmeßgerät nach Anspruch 6, **dadurch gekennzeichnet, daß** der Hilfsspannungssensor (6) zur Übertragung eines Hilfsspannungssignals mit der Drucksignalausgabeeinrichtung (4) verbunden ist und von der Drucksignalausgabeeinrichtung (4) ein auf der Grundlage des Hilfsspannungssignal korrigiertes Drucksignal ausgebbar ist.

8. Verfahren zur Druckmessung bei einem Massendurchflußmeßgerät, das nach dem Coriolis-Prinzip arbeitet und eine Meßleitung (1) aufweist, **dadurch gekennzeichnet, daß** die mechanische Spannung der Meßleitung (1) erfaßt wird und auf der Grundlage der erfaßten Spannung der Meßleitung (1) der Druck in der Meßleitung (1) ermittelt wird.

9. Verfahren nach Anspruch 8, **dadurch gekennzeichnet, daß** ein auf der Grundlage des ermittelten Drucks korrigiertes Massendurchflußsignal ermittelt wird.

10. Verfahren nach Anspruch 8 oder 9, **dadurch gekennzeichnet, daß** die Spannung mittels der Umfangsänderung der Meßleitung (1) erfaßt wird.

11. Verfahren nach Anspruch 10, **dadurch gekennzeichnet, daß** als Spannung nur die Umfangsänderung der Meßleitung (1) erfaßt wird und zusätzlich dazu eine Hilfsspannung erfaßt wird, die von der Umfangsspannung nicht beeinflußt wird.

12. Verfahren nach Anspruch 11, **dadurch gekennzeichnet, daß** der auf der Grundlage der Spannung ermittelte Druck mittels der Hilfsspannung korrigiert wird.

13. Verwendung des Verfahrens nach einem der Ansprüche 8 bis 12 für ein solches Massendurchflußmeßgerät, bei dem eine dünnwandige Meßleitung (1) vorgesehen ist, deren Durchmesser in der Größenordnung ihrer Länge liegt.
